(19) **Europäisches Patentamt**
**European Patent Office**
**Office européen des brevets**

(11) **EP 4 130 111 A1**

(12) **EUROPEAN PATENT APPLICATION**
published in accordance with Art. 153(4) EPC

(43) Date of publication:
**08.02.2023 Bulletin 2023/06**

(21) Application number: **21779399.1**

(22) Date of filing: **25.03.2021**

(51) International Patent Classification (IPC):
*C08J 5/18* (1974.07)  *B32B 27/32* (1968.09)
*B65D 65/40* (1968.09)  *B29C 55/04* (1985.01)
*B29K 23/00* (1985.01)

(52) Cooperative Patent Classification (CPC):
**B32B 27/32; B65D 65/40; C08J 5/18;** B29C 55/04

(86) International application number:
**PCT/JP2021/012697**

(87) International publication number:
**WO 2021/200592 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2020  JP 2020060690**

(72) Inventors:
• **TOMATSU, Wakato**
**Inuyama-shi, Aichi 484-8508 (JP)**
• **NISHI, Tadashi**
**Inuyama-shi, Aichi 484-8508 (JP)**

(74) Representative: **Vossius & Partner
Patentanwälte Rechtsanwälte mbB
Siebertstraße 3
81675 München (DE)**

(71) Applicant: **TOYOBO CO., LTD.
Osaka-shi
Osaka 5300001 (JP)**

(54) **POLYOLEFIN RESIN FILM**

(57) It is provided that a polyolefin-based resin film that realizes, even when the polyolefin-based resin film is laminated with a base material film having a large strain in the molecular orientation axis, such as a biaxially stretched polyamide-based resin film, a packaging bag obtained from a laminated body thereof which is excellent in straight cuttability, ease of tearing, and bag-making processability, which is less likely to be broken when the bag has fallen even after having been subjected to retorting treatment, and which is less likely to have occurrence of whiskers at the time of opening of the packaging bag. A polyolefin-based resin film formed from a polypropylene-based resin composition, the polyolefin-based resin film containing: in 100 parts by weight of a polypropylene-based resin composition, 40 to 97 parts by weight of a propylene-ethylene block copolymer; 0 to 50 parts by weight of a propylene-α olefin random copolymer or a propylene homopolymer; and 3 to 10 parts by weight of at least one type of an elastomer selected from the group consisting of an ethylene-propylene copolymer elastomer, a propylene-butene copolymer elastomer, and an ethylene-butene copolymer elastomer, wherein a heat shrinkage ratio in a longitudinal direction is not lower than 1% and not higher than 9%, and an x-axis orientation coefficient ΔNx calculated from a refractive index is not less than 0.0150 and not larger than 0.0250.

EP 4 130 111 A1

**Description**

TECHNICAL FIELD

The present invention relates to a polyolefin-based resin film. Further, the present invention relates to a laminated body comprising the polyolefin-based resin film and at least one type of a base film selected from the group consisting of a polyamide resin film, a polyester resin film, and a polypropylene resin film.

BACKGROUND ART

A packaging bag is produced by thermocompression bonding (hereinafter, referred to as heat-sealing) of the peripheral edges of a laminated body mainly including a base film such as a polyamide resin film, a polyester resin film, or a polypropylene resin film and a polyolefin-based resin film at a temperature close to the melting point of the polyolefin-based resin film in a state where the surfaces of the polyolefin-based resin film are in contact with each other.

As food packaging bags, so-called retort pouches suitable for long-term food storage are widely used. Such food packaging bags are sterilized by pressurized steam at about 130°C after food is packed therein.

Against the backdrop of women's participation in society, a trend toward the nuclear family, and aging society, demand for retort pouches has recently increased, and at the same time, retort pouches are required to have improved properties.

For example, such retort pouches are recently often packed in boxes during transportation before sold in stores, and are therefore required to be less likely to break even when dropped in such a process, particularly even when dropped under refrigeration.

Further, when a food content is taken out of a packaging bag, particularly a retort pouch, the packaging bag is often torn with fingers from an incision that is so-called a notch made in the peripheral heat-sealed portion of the packaging bag. However, when a conventional laminated body is used, there is a fear that a packaging bag cannot be torn in parallel with one edge of the packaging bag, usually in parallel with the horizontal direction and is therefore obliquely torn, or a phenomenon called "Nakiwakare" occurs in which the front-side laminated body and the back-side laminated body of a packaging bag are opposite in tearing direction in the vertical direction, and therefore it is difficult to take out a food content, a food content makes fingers or clothing dirty, or fingers are burned when a food content has been heated.

The reason why it is difficult to tear the packaging bag in parallel with one edge of the packaging bag is that a base film used for the laminated body is distorted, that is, the molecular orientation axis direction of the base film is not parallel with one edge of the packaging body.

Such a problem does not occur if the molecular orientation axis direction of the base film can be made the same with the tearing direction of the packaging bag. The molecular orientation axis direction of the widthwise center of a produced wide stretched film is coincident with the machine direction of the film, and therefore a resulting packaging bag can be torn in parallel with one edge of the packaging bag. However, the molecular orientation axis direction of the widthwise end of the base film is inclined from the machine direction of the film, and therefore the tearing direction of a resulting packaging bag is inclined in the molecular orientation axis direction of the base film even if the film is processed so that the machine direction of the film matches the longitudinal or transverse direction of the packaging bag. It is practically impossible to completely avoid the procurement of a base film using the widthwise end of film. In addition, the degree of distortion tends to be larger than ever before due to an increase in the production speed or width of a base film.

Therefore, attempts have been made to solve such a problem by devising a polyolefin-based resin film to be laminated on a base film.

Patent Document 1 discloses a film obtained by uniaxially stretching a polyolefin-based resin sheet containing an ethylene-propylene block copolymer and an ethylene-propylene copolymer 3.0 times or less. However, there is a room for improvement in tear strength and there is a problem that "Nakiwakare" is likely to occur.

Patent Document 2 and Patent Document 3 disclose a film obtained by uniaxially stretching a polyolefin-based resin sheet containing a propylene-ethylene block copolymer or a propylene-ethylene random copolymer and a propylene-butene elastomer and/or an ethylene-butene elastomer about 5 times. However, such films have a problem that dimensional stability against heat is low, and the packaging body is deformed due to heat applied during retorting treatment, resulting in impaired appearance, and a problem that the packaging body is easily broken at a low temperature.

From Patent Document 4, a film obtained by uniaxially stretching about 4 times a polyolefin-based resin sheet mainly composed of a propylene-ethylene block copolymer is known. However, such a film has the following problem. That is, when a four-side sealed bag or the like manufactured from a laminated body of the film and a biaxially stretched polyamide film and the like is tear-opened from a notch, filamentous film pieces are separated from the heat-seal edge (i.e., occurrence of whiskers).

PRIOR ART DOCUMENTS

PATENT DOCUMENTS

Patent Document 1: Japanese Patent No. 5790497
Patent Document 2: JP-A-2014-141302
Patent Document 3: JP-T-2012-500307
Patent Document 4: WO2019/123944A1

SUMMARY OF THE INVENTION

PROBLEM TO BE SOLVED BY THE INVENTION

It is an object of the present invention to provide a polyolefin-based resin film such that a packaging bag obtained from a laminated body has excellent straight cuttability, ease of tearing, and bag-making processability, is less likely to break due to dropping when the bag has fallen even after having been subjected to retorting treatment, and is less likely to have occurrence of whiskers at the time of opening of the packaging bag even if the laminated body is obtained by laminating the polyolefin-based resin film on a base film whose molecular orientation axis is greatly distorted, such as a biaxially-stretched polyamide-based resin film.

SOLUTION TO THE PROBLEM

In order to attain the object, the present inventors conducted thorough studies and found that a polyolefin-based resin film as below could be obtained, and completed the present invention. That is, the polyolefin-based resin film is formed from a polypropylene-based resin composition and includes a propylene-ethylene block copolymer, a propylene-$\alpha$ olefin random copolymer, and in addition, an ethylene-propylene copolymer elastomer, and a propylene-butene copolymer elastomer. In the polyolefin-based resin film, although polymer molecules are caused to be oriented mainly in one direction by stretching, heat shrinkage ratio in each direction is reduced and orientation of molecular chain in the longitudinal direction is caused to fall within a specific range. Accordingly, even when the polyolefin-based resin film is laminated with a base material film having a large strain in the molecular orientation axis such as a biaxially stretched polyamide-based resin film, a packaging bag obtained from a laminated body of the polyolefin-based resin film and the base material film is excellent in straight cuttability, ease of tearing, and bag-making processability, and is less likely to be broken when the bag has fallen even after having been subjected to retorting treatment. In addition, whiskers are less likely to occur at the time of opening.

That is, the present invention has the following aspects.

[1] A polyolefin-based resin film formed from a polypropylene-based resin composition, the polyolefin-based resin film containing: in a total of 100 parts by weight of a polypropylene-based resin, 40 to 97 parts by weight of a propylene-ethylene block copolymer; 0 to 50 parts by weight of a propylene-$\alpha$ olefin random copolymer or a propylene homopolymer; and 3 to 10 parts by weight of at least one type of an elastomer selected from the group consisting of an ethylene-propylene copolymer elastomer, a propylene-butene copolymer elastomer, and an ethylene-butene copolymer elastomer, wherein a heat shrinkage ratio in a longitudinal direction is not lower than 1% and not higher than 9%, and an x-axis orientation coefficient $\Delta Nx$ calculated from a refractive index is not less than 0.0150 and not larger than 0.0250.

[2] The polyolefin-based resin film according to the above [1], comprising a configuration of a plurality of layers including at least two layers.

[3] A laminated body comprising the polyolefin-based resin film according to the above [1] or [2] and at least one type of a base material film selected from the group consisting of a polyamide resin film, a polyester resin film, and a polypropylene resin film.

[4] The laminated body according to the above [3], wherein a straight cuttability is not larger than 5 mm.

[5] A packaging body formed from the laminated body according to the above [4].

[6] The packaging body according to the above [5] for use in retorting.

EFFECT OF THE INVENTION

The polyolefin-based resin film of the present invention is excellent in straight cuttability, ease of tearing, and bag-making processability, is less likely to be broken when the bag has fallen even after having been subjected to retorting treatment, and is less likely to have occurrence of whiskers at the time of opening of the packaging bag. The polyolefin-based resin film of the present invention is particularly suitable for retort pouches.

MODE FOR CARRYING OUT THE INVENTION

Hereinbelow, the present invention will be described in detail.

(Propylene-ethylene block copolymer)

In the present invention, a propylene-ethylene block copolymer can be used. The propylene-ethylene block copolymer used in the present invention is a multi-stage copolymer obtained through a first-stage polymerization step in which a copolymer component containing a large amount of propylene and a small amount of ethylene is obtained and a second-stage polymerization step in which a copolymer component containing a small amount of propylene and a large amount of ethylene is obtained. More specifically, a propylene-ethylene block copolymer obtained by gas-phase polymerization is preferably used as shown in JP-A-2000-186159. That is, the multi-stage copolymer may be a block copolymer obtained by forming a polymer portion (component A) mainly containing propylene by polymerization in the presence of substantially no inert solvent in a first step and then forming a propylene-ethylene copolymer portion (component B) having an ethylene content of 20 to 50 parts by weight by polymerization in a gas phase in a second step, but is not limited thereto.

A melt flow rate (MFR) (as measured at 230°C and a load of 2.16 kg) of the propylene-ethylene block copolymer is preferably 1 to 10 g/10 min, more preferably 2 to 7 g/10 min. If the melt flow rate is 1 g/10 min or more, extrusion through a T-die is easy. On the other hand, if the melt flow rate 10 g/10 min or less, impact strength is likely to improve.

In the present invention, a portion soluble in xylene at 20°C is called CXS, and a portion insoluble in xylene at 20°C is called CXIS. In the propylene-ethylene block copolymer used in the present invention, CXS mainly contains a rubber component (component B) and CXIS mainly contains a polypropylene component (component A). When the limiting viscosity of CXS and the limiting viscosity of CXIS are defined as $[\eta]$CXS and $[\eta]$CXIS, respectively, $[\eta]$CXS is preferably in the range of 1.8 to 3.8 dl/g, more preferably in the range of 2.0 to 3.0 dl/g. If $[\eta]$CXS is 3.0 dl/g or less, fish eyes are less likely to occur in the polyolefin-based resin film. On the other hand, if $[\eta]$CXS is 1.8 dl/g or more, heat-seal strength when two sheets of the polyolefin-based resin film are heat-sealed is less likely to be significantly reduced.

On the other hand, $[\eta]$CXIS is preferably in the range of 1.0 to 3.0 dl/g. If $[\eta]$CXIS is 3.0 dl/g or less, extrusion through a T-die is easy. On the other hand, if $[\eta]$CXIS is 1.0 dl/g or more, impact strength is likely to improve.

The above-described $[\eta]$CXS and $[\eta]$CXIS are values measured by the following measurement method. First, 5 g of a sample is completely dissolved in 500 mL of boiling xylene, and then the temperature of the resulting solution is decreased to 20°C, and the solution is allowed to stand for 4 hours or more. Then, the solution is separated into a filtrate and a precipitate by filtration, and the limiting viscosity ($[\eta]$) of a component (CXS) obtained by drying and solidifying the filtrate and the limiting viscosity ($[\eta]$) of a solid (CXIS) obtained by drying the precipitate at 70°C under reduced pressure are measured in tetralin at 135°C using an Ubbelohde-type viscometer.

It is generally known that MFR and the limiting viscosity $\eta$ of an overall film correlate with each other. The MFR of a resin used can approximately be known by knowing $\eta$ of a film. $\eta$ gives an indication of molecular weight, and a larger value of $\eta$ indicates a larger molecular weight, and a smaller value of $\eta$ indicates a smaller molecular weight. MFR gives an indication of molecular weight, and a smaller value of MFR indicates a larger molecular weight, and a larger value of MFR indicates a smaller molecular weight.

The copolymerization ratio of an ethylene component in the propylene-ethylene block copolymer is preferably 1 to 15% by weight, preferably 3 to 10% by weight. The copolymerization ratio of a propylene component in the propylene-ethylene block copolymer is preferably 85 to 99% by weight, preferably 90 to 97% by weight.

The lower limit of melting point of the propylene-ethylene block copolymer is not particularly limited, but is preferably 120°C, more preferably 125°C. If the melting point is 120°C or more, heat resistance is easy to be improved or the inner surfaces of a bag are less likely to be fused together when the bag is subjected to retort treatment. The upper limit of melting point of the propylene-ethylene block copolymer is not particularly limited, but is preferably 175°C, more preferably 170°C. If the melting point is 175°C or less, heat-seal temperature is likely to be low.

Specific examples of the propylene-ethylene block copolymer include a block copolymerized polypropylene resin having an ethylene content of 7% by weight and a limiting viscosity $\eta$ of CXS of 3.0 dl/g (MFR at 230°C and a load of 2.16 kg: 3.0 g/10 min, melting point: 164°C, WFS5293-22 manufactured by Sumitomo Chemical Co., Ltd) and a block copolymerized polypropylene resin having an ethylene content of 6% by weight and a limiting viscosity $\eta$ of CXS of 2.3 dl/g (MFR at 230°C and a load of 2.16 kg: 3.0 g/10 min, melting point: 164°C, WFS5293-29 manufactured by Sumitomo Chemical Co., Ltd).

(Propylene-a olefin random copolymer)

In the present invention, a propylene-$\alpha$ olefin random copolymer is preferably added for the purpose of decreasing the heat-seal temperature of the polyolefin-based resin film.

Examples of the propylene-$\alpha$ olefin random copolymer include copolymers of propylene and at least one C2 to C20 $\alpha$-olefin other than propylene.

Examples of the C2 to C20 $\alpha$-olefin monomer to be used include ethylene, butene-1, pentene-1, 4-methylpentene-1, hexene-1, and octene-1. The C2 to C20 $\alpha$-olefin monomer is not particularly limited, but is preferably ethylene in terms of compatibility with the propylene-ethylene block copolymer. If necessary, two or more propylene-$\alpha$ olefin random copolymers may be used in combination. The propylene-$\alpha$ olefin random copolymer is particularly preferably a propylene-ethylene random copolymer. In this description, random copolymers are listed in descending order of monomer composition ratio.

The lower limit of melt flow rate (MFR) of the propylene-$\alpha$ olefin random copolymer at 230°C and a load of 2.16 kg is preferably 0.6 g/10 min, more preferably 1.0 g/10 min, even more preferably 1.2 g/10 min. If the MFR is 0.6 g/10 min or more, compatibility with the propylene-ethylene block copolymer is high so that blushing of the film is less likely to occur. The upper limit of melt flow rate of the propylene-$\alpha$ olefin random copolymer is preferably 10.0 g/10 min, more preferably 8.0 g/10 min, even more preferably 7.0 g/10 min.

As a polymerization catalyst to be used in manufacture of the propylene-$\alpha$ olefin random copolymer, a propylene-$\alpha$ olefin random copolymer containing a metallocene-based olefin polymerization catalyst is preferably used. The propylene-$\alpha$ olefin random copolymer containing a metallocene-based olefin polymerization catalyst is characterized by having less component contents in a low molecular weight region and a high molecule region. It was also newly found that when the propylene-$\alpha$ olefin random copolymer containing a metallocene-based olefin polymerization catalyst is used, occurrence of whiskers is suppressed.

It is noted that the metallocene-based olefin polymerization catalyst is a catalyst composed of (i) a transition metal compound (so-called metallocene compound) of group 4 of the periodic table containing a ligand having a cyclopentadienyl skeleton; (ii) a co-catalyst that reacts with the metallocene compound to be able to realize activation to a stable ionic state; and, as necessary, (iii) an organoaluminum compound, and any publicly-known catalyst can be used.

The copolymerization ratio of an ethylene component in the propylene-$\alpha$ olefin random copolymer is preferably 1 to 15% by weight, preferably 3 to 10% by weight. The copolymerization ratio of a propylene component in the propylene-ethylene block copolymer is preferably 85 to 99% by weight, preferably 90 to 97% by weight.

The lower limit of melting point of the propylene-$\alpha$ olefin random copolymer is preferably 120°C, more preferably 125°C. If the melting point is 120°C or more, heat resistance is easy to be improved or the inner surfaces of a bag may be fused together when the bag is subjected to retort treatment. The upper limit of melting point of the propylene-$\alpha$ olefin random copolymer is preferably 145°C, more preferably 140°C. If the melting point is 145°C or less, heat-seal temperature is likely to low.

Specific examples of the propylene-$\alpha$ olefin random copolymer include: S131 manufactured by Sumitomo Chemical Co., Ltd. (ethylene content: 5.5% by weight, density: 890 kg/m$^3$, MFR at 230°C and 2.16 kg: 1.5 g/10 min, melting point: 132°C, Ziegler-Natta catalyst), Propylene-ethylene random copolymer WFW4M manufactured by Japan Polypropylene Corporation (ethylene content: 7% by weight, density: 900 kg/m$^3$, MFR at 230°C and 2.16 kg: 7.0 g/10 min, melting point: 136°C, metallocene catalyst), WFX4M manufactured by Japan Polypropylene Corporation (ethylene content: 7% by weight, density: 900 kg/m$^3$, MFR at 230°C and 2.16 kg: 7.0 g/10 min, melting point: 125°C, metallocene-based catalyst), and the like.

(Propylene homopolymer)

In the present invention, a propylene homopolymer can be used. The propylene homopolymer includes: isotactic polypropylene having high crystallinity and being excellent in rigidity and heat resistance; and atactic polypropylene having low crystallinity and being excellent in flexibility.

As the propylene homopolymer to be used, isotactic polypropylene having high crystallinity and being able to suppress aggravation of heat shrinkage ratio is preferable.

A melt flow rate (MFR) of the propylene homopolymer (as measured at 230°C and a load of 2.16 kg) is preferably 1 to 10 g/10 min, more preferably 2 to 7. If the melt flow rate is 1 g/10 min or more, extrusion through a T-die is easy. On the other hand, if the melt flow rate 10 g/10 min or less, impact strength of the film is likely to be improved.

The propylene homopolymer containing the metallocene-based olefin polymerization catalyst is characterized by having: when compared with a propylene homopolymer containing a Ziegler-Natta-based olefin polymerization catalyst, a narrower molecular weight distribution; and less components on the low molecular weight side and less components on the high molecular weight side with respect to the weight-average molecular weight as an index. In addition, it was newly found that when the propylene homopolymer containing the metallocene-based olefin polymerization catalyst is used, occurrence of whiskers are suppressed. Further, flexibility and strength are excellent. It is noted that the metallocene-based olefin polymerization catalyst is a catalyst composed of (i) a transition metal compound (so-called metallocene compound) of group 4 of the periodic table containing a ligand having a cyclopentadienyl skeleton; (ii) a cocatalyst that reacts with the metallocene compound to be able to realize activation to a stable ionic state; and, as necessary, (iii) an organoaluminum compound, and any publicly-known catalyst can be used.

Specific examples of the propylene homopolymer include: F300SP (ethylene content: 0% by weight, density: 890 kg/m$^3$, MFR at 230°C and load of 2.16 kg: 3.0 g/10 min, melting point: 160°C, Ziegler-Natta catalyst) manufactured by Prime Polymer Co., Ltd., and the like.

(Copolymer elastomer)

In the present invention, in order to increase the bag-breaking resistance at the time of falling of the packaging bag of the present invention, a copolymer elastomer is used as a component of the polyolefin-based resin film of the present invention.

Examples of the copolymer elastomer include an olefin-based thermoplastic elastomer and the like. The olefin-based thermoplastic elastomer includes an olefin-based thermoplastic copolymer that exhibits rubber-like elasticity at a temperature near ordinary temperature, and an olefin-based thermoplastic copolymer elastomer that exhibits relatively high Shore hardness and good transparency.

As such a copolymer elastomer, an elastomer of at least one type selected from the group consisting of an ethylene-propylene copolymer elastomer, a propylene-butene copolymer elastomer, and an ethylene-butene copolymer elastomer may be used. From the viewpoint of impact resistance and heat-seal strength, an ethylene-propylene copolymer elastomer is preferable. The ethylene-propylene copolymer elastomer denotes, among thermoplastic elastomers, an elastomer that is amorphous or has low crystallinity and that is obtained by copolymerizing ethylene and propylene.

The copolymer elastomer used in the present invention has a melt flow rate (MFR) at 230°C and a load of 2.16 kg of 0.2 to 5 g/10 min, a density of 820 to 930 kg/m$^3$, and a molecular weight distribution (Mw/Mn) determined by GPC of 1.3 to 6.0.

If the melt flow rate (MFR) of the copolymer elastomer used in the present invention at 230°C and a load of 2.16 kg is 0.2 g/10 min or more, uniformity of kneading is likely to occur or fish eye is less likely to occur. If the melt flow rate (MFR) is 5 g/min or less, bag-breaking resistance is likely to be improved.

The limiting viscosity [η] of the copolymer elastomer used in the present invention is preferably 1.0 to 5.0, preferably 1.2 to 3.0 in terms of maintaining heat-seal strength and impact strength and bag drop impact strength. If the limiting viscosity [η] is 1.0 or more, uniformity of kneading is likely to occur or fish eye is less likely to occur. If the limiting viscosity [η] is 5.0 or less, bag-breaking resistance and heat-seal strength are likely to be improved.

The copolymerization ratio of an ethylene component in the ethylene-propylene copolymer elastomer, the propylene-butene copolymer elastomer, and the ethylene-propylene copolymer elastomer is preferably 55 to 85% by weight, preferably 60 to 80% by weight. The copolymerization ratio of a propylene component in the ethylene-propylene copolymer elastomer is preferably 15 to 45% by weight, preferably 20 to 40% by weight.

A specific example of the ethylene-propylene copolymer elastomer includes an ethylene-propylene copolymer elastomer (TAFMER P0480 manufactured by Mitsui Chemicals, Inc.) having a propylene content of 27% by weight, a density of 870 kg/m$^3$, and a MFR (230°C, 2.16 kg) of 1.8 g/10 min.

(Polyolefin-based resin film)

The polyolefin-based resin film of the present invention may be formed as a single-layer, or a plurality of layers of two or more layers. For example, the polyolefin-based resin film may have a configuration of a heat-seal layer/laminate layer, or a three-layer configuration of heat-seal layer/intermediate layer/laminate layer. Further, each layer may be composed of a plurality of layers.

The heat-seal layer is the layer positioned on the outermost surface side of the polyolefin-based resin film. Heat-seal layers are subjected to thermocompression bonding while being opposed to each other, whereby a packaging body can be manufactured.

The layer positioned on the outermost surface side on the opposite side of the heat-seal layer is the laminate layer, and the laminate layer can be laminated with, by being attached to, a base material film such as a polyester film or a polyamide film.

In the case of a three-layer configuration of heat-seal layer/intermediate layer/laminate layer, if the end portion of a film product of the present invention or the film product itself is recovered to be made into pellets again, and the resultant pellets are used as the raw material of the intermediate layer, it is possible to reduce the cost of the film product without impairing characteristics such as straight cuttability, ease of tearing, bag-making processability, and bag-breaking resistance.

In each layer of the polyolefin-based resin film of the present invention, when the mixing ratio of a propylene-ethylene block copolymer; a propylene-α olefin random copolymer or a propylene homopolymer; and at least one type of an elastomer selected from the group consisting of an ethylene-propylene copolymer elastomer, a propylene-butene copolymer elastomer, and an ethylene-butene copolymer elastomer is changed, it is possible to adjust the balance of characteristics such as tearability, heat-seal strength, and bag-breaking resistance.

(Propylene-ethylene block copolymer)

In each layer of the polyolefin-based resin film of the present invention, in a total of 100 parts by weight of a polypropylene-based resin, the content of the propylene-ethylene block copolymer is, from the viewpoint of "Nakiwakare", in a range of 40 to 97 parts by weight, preferably 60 parts or more by weight, and more preferably 85 parts or less by weight.
When the ratio of the propylene-ethylene block copolymer is 40 parts or more by weight, the shrinkage ratio is easily reduced, and the bag-breaking resistance is also easily improved. When the ratio of the propylene-ethylene block copolymer is 97 parts or less by weight, heat-sealability at a low temperature is easily obtained.

(Propylene-α olefin random copolymer or propylene homopolymer)

In each layer of the polyolefin-based resin film of the present invention, in a total of 100 parts by weight of the polypropylene-based resin, the content of the propylene-α olefin random copolymer or the propylene homopolymer is, from the viewpoint of "Nakiwakare", in a range of 0 to 50 parts by weight, preferably 5 parts or more by weight and 40 parts or less by weight, and more preferably 15 parts or more by weight.
When the content of the propylene-α olefin random copolymer or the propylene homopolymer is 5 parts or more by weight, heat-sealability at a low temperature is easily obtained, and the heat-seal strength is also easily increased. When the content is 50 parts or less by weight, the heat shrinkage ratio is easily reduced.

(Copolymer elastomer)

In each layer of the polyolefin-based resin film of the present invention, in a total of 100 parts by weight of the polypropylene-based resin, the content of at least one type elastomer selected from the group consisting of an ethylene-propylene copolymer elastomer, a propylene-butene copolymer elastomer, and an ethylene-butene copolymer elastomer is in a range of 3 parts or more by weight and 10 parts or less by weight. Preferably, the ethylene-propylene copolymer elastomer is in a range of 4 to 9 parts by weight, and more preferably in a range of 5 to 8 parts by weight.
When elastomers that is at least one type selected from the group consisting of the ethylene-propylene copolymer elastomer, the propylene-butene copolymer elastomer, and the ethylene-butene copolymer elastomer are contained in 3 parts or more by weight to provide ease of tearing, it is easy to obtain heat-sealability and bag-breaking resistance. When elastomers that is at least one type selected from the group consisting of the ethylene-propylene copolymer elastomer, the propylene-butene copolymer elastomer, and the ethylene-butene copolymer elastomer are contained in 10 parts or less by weight, film appearance (transparency) becomes good.
The polyolefin-based resin film of the present invention has a sea-island structure composed of a matrix polymer and a domain, and thus can exhibit good bag-breaking resistance. The matrix polymer has, as the main component, the propylene-α olefin random copolymer and a portion of which the main component is propylene of the propylene-ethylene block copolymer. The domain has, as the main component, a portion of which the main component is ethylene of each of the ethylene-propylene copolymer elastomer and the propylene-ethylene block copolymer.

(Additive)

The polypropylene-based resin composition of the present invention may contain an anti-blocking agent. The anti-blocking agent to be added is not particularly limited, and examples thereof include inorganic particles such as calcium carbonate, silicon dioxide, titanium dioxide, barium sulfate, magnesium oxide, talc, and zeolite and organic particles made of an acrylic, styrene-based, or styrene-butadiene-based polymer or a cross-linked product of such a polymer. In consideration of controllability of particle size distribution, dispersibility, ease of maintaining optical appearance, and prevention of dropping off of particles from the film, organic particles made of a cross-linked product are preferred. Particularly, the cross-linked product is preferably a cross-linked acrylic polymer made of an acrylic monomer such as acrylic acid, methacrylic acid, an acrylic acid ester, or a methacrylic acid ester, and cross-linked polymethyl methacrylate is more preferably recommended.
The surfaces of these particles may be coated with various materials for the purpose of improving dispersibility or preventing dropping off of particles.
These particles may have an indefinite shape, a spherical shape, an oval spherical shape, a rod-like shape, a horn-like shape, a polyhedral shape, or a conical shape, and further may be porous particles having pores in surfaces and inside thereof. The anti-blocking agent preferably has an average particle diameter of 3 to 12 $\mu$m in terms of film appearance and blocking resistance.

The use of only one kind of anti-blocking agent is effective, but there is a case where a higher anti-blocking effect can be obtained by mixing two or more kinds of inorganic particles different in particle diameter or shape because more complicated projections are formed on the surface of the film.

When a block copolymer is used as a main constituent resin, there is a case where surface irregularities are formed by dispersion of the polymer, and therefore a high anti-blocking effect can be obtained without adding the anti-blocking agent.

The polypropylene-based resin composition of the present invention may contain an organic lubricant. This makes it possible to improve the lubricity of a laminated film or the effect of preventing blocking, thereby improving handleability of the film. The reason for this is considered to be that the organic lubricant is present on the surface of the film due to bleeding out, and therefore a lubricating effect or a releasing effect is developed. Further, the organic lubricant to be added preferably has a melting point equal to or more than ordinary temperature. Preferred examples of the organic lubricant include fatty acid amides and fatty acid esters. More specific examples thereof include oleic amide, erucic amide, behenic amide, ethylene bisoleic amide, hexamethylene bisoleic amide, and ethylene bisoleic amide. These organic lubricants may be used singly, but are preferably used in combination of two or more of them because there is a case where lubricity and the effect of preventing blocking can be maintained even in more severe environments.

If necessary, the polypropylene-based resin composition of the present invention may contain appropriate amounts of an antioxidant, an antistatic agent, an anti-fogging agent, a neutralizer, a nucleating agent, a colorant, other additives, an inorganic filler etc. without interfering with the achievement of the object of the present invention. As the antioxidant, a phenol-based antioxidant and a phosphite-based antioxidant may be used singly or in combination, or an antioxidant having the skeleton of a phenol-based antioxidant and the skeleton of a phosphite-based antioxidant in one molecule may be used singly.

(Method for producing polyolefin-based resin film)

As a method for forming the polyolefin-based resin film of the present invention, for example, an inflation method or a T-die method may be used. However, a T-die method is preferred from the viewpoint of enhancing transparency or ease of drafting. An inflation method uses air as a cooling medium, but a T-die method uses a cooling roll, and is therefore a production method advantageous for increasing the cooling speed of an unstretched sheet. By increasing the cooling speed, crystallization of an unstretched sheet can be prevented, which is advantageous in that high transparency can be achieved and the burden of stretching in a subsequent process can easily be controlled. For these reasons, the polyolefin-based resin film of the present invention is more preferably formed by a T-die method.

The lower limit of temperature of the cooling roll at the time when a melted raw material resin is cast to obtain a non-oriented sheet is preferably 15°C, more preferably 20°C. If the temperature of the cooling roll is less than the above lower limit, there is a case where the contact between an unstretched sheet and the cooling roll is poor due to the occurrence of condensation on the cooling roll, which causes a thickness defect. The upper limit of temperature of the cooling roll is preferably 50°C, more preferably 40°C. If the temperature of the cooling roll is 50°C or less, the transparency of the polyolefin-based resin film is less likely to deteriorate.

A method for stretching a non-oriented sheet is, for example, an inflation method, a tenter transverse stretching method, or a roll longitudinal stretching method may be used. However, a roll longitudinal stretching method is preferred in terms of orientation controllability.

By stretching a non-oriented sheet under appropriate conditions, straight cuttability is developed. This is because molecular chains are regularly arranged in a stretch direction.

The lower limit of a stretch ratio is preferably 2.8 times, more preferably 3.3 times. If the stretch ratio is 2.8 times or more, tear strength in the stretching direction is less likely to increase so that straight cuttability is improved. The lower limit of the stretch ratio is more preferably 3.4 times, even more preferably 3.5 times.

The upper limit of the stretch ratio is preferably 3.9 times. If the stretch ratio is 3.9 times or less, orientation is less likely to excessively proceed or a heat shrinkage in the longitudinal direction is less likely to be large. The upper limit of the stretch ratio is more preferably 3.8 times.

The lower limit of a roll temperature during stretching is preferably 80°C. If the roll temperature is 80°C or more, stretch stress applied to the film is less likely to increase so that heat shrinkage ratio of the film is not too high. The lower limit of the roll temperature is more preferably 90°C.

The upper limit of the stretch roll temperature is preferably 140°C. If the stretch roll temperature is 140°C or less, stretching stress applied to the film is not too low, the heat shrinkage ratio in the longitudinal direction of the film is not too low, and the film is less likely to be fused to the stretch roll. The upper limit of the stretch roll temperature is more preferably 130°C, even more preferably 125°C, particularly preferably 115°C.

It is preferred that before the unstretched sheet is subjected to a stretching process, the temperature of the sheet is increased by contact with a pre-heating roll.

The lower limit of temperature of the pre-heating roll at the time when the non-oriented sheet is stretched is preferably 80°C, more preferably 90°C. If the temperature of the pre-heating roll is 80°C or more, stretch stress is not too high and thickness variation is less likely to large. The upper limit of temperature of the pre-heating roll is preferably 140°C, more preferably 130°C, even more preferably 125°C. If the temperature of the pre-heating roll is 140°C or less, the film does not easily stick to the roll so that thickness variation is less likely to large.

The polyolefin-based resin film subjected to the stretching process is preferably subjected to annealing treatment to prevent heat shrinkage ratio. Examples of a method for annealing treatment include a roll heating method and a tenter method, but a roll heating method is preferred in terms of simplicity of equipment or ease of maintenance. Since annealing treatment reduces the internal stress of the film, thereby suppressing heat shrinkage ratio in the longitudinal direction of the film, heat shrinkage ratio in the longitudinal direction and heat-seal strength are not sacrificed compared to merely increase the stretch ratio in order to improve tearability like a conventional method. Annealing treatment may give adverse effect on properties other than heat shrinkage ratio in the longitudinal direction and heat-seal strength, but in the present invention, the adverse effects on bag-breaking resistance and the like can be suppressed by using a copolymer elastomer in combination.

The lower limit of temperature of annealing treatment is preferably 100°C. If the temperature of annealing treatment is 100°C or less, a heat shrinkage ratio in the longitudinal direction is less likely to high or tear strength is less likely to increase so that the finished quality of a packaging bag after bag making or retorting may deteriorate. The lower limit of temperature of annealing treatment is more preferably 115°C, particularly preferably 125°C.

The upper limit of temperature of annealing treatment is preferably 140°C.
When the temperature of annealing treatment is higher, a heat shrinkage ratio of the longitudinal direction is more likely to reduce. However, if the temperature of annealing treatment exceeds the above upper limit, there is a case where the thickness of the film varies or the film is fused to production equipment. The upper limit of temperature of annealing treatment is more preferably 135°C.

In an annealing step, a relaxation step can be provided by sequentially reducing the conveyance speed of the film, such as, for example, reducing the rotation speed of the roll after heating. When the relaxation step is provided, the heat shrinkage ratio of the manufactured polyolefin-based resin film can be reduced.

The upper limit of the relaxation rate in the relaxation step is preferably 10% and more preferably 8%. When the relaxation rate is 10% or less, the heat shrinkage ratio can be prevented from becoming too low. The lower limit of the relaxation rate is preferably 1% and more preferably 3%. When the relaxation rate is 1% or more, the heat shrinkage ratio in the longitudinal direction of the polyolefin-based resin film is less likely to be increased.

In the present invention, the lamination surface of the polyolefin-based resin film described above is preferably subjected to surface activation by corona treatment or the like. This improves the strength of lamination between the polyolefin-based resin film and a base film. The lamination surface is provided on the opposite side of the heat-seal surface.

(Properties of polyolefin-based resin film)

(Film thickness)

The lower limit of the thickness of the polyolefin-based resin film according to the present invention is preferably 10 μm, more preferably 30 μm. If the thickness is less than the above lower limit, the polyolefin-based resin film is relatively thinner than a base film, and therefore there is a case where straight cuttability of a laminated body deteriorates, the film is difficult to process due to too low resilience, or bag-breaking resistance deteriorates due to a reduction in impact resistance. The upper limit of thickness of the film is preferably 200 μm, more preferably 130 μm. If the thickness of the film exceeds the above upper limit, there is a case where the film is difficult to process due to too high resilience or an appropriate packaging body is difficult to produce.

(Orientation coefficient in longitudinal direction)

An orientation coefficient ΔNx in the longitudinal direction used in the present invention can be calculated by formula 1.

$$\Delta Nx = Nx - (Ny + Nz)/2 \text{ (formula 1)}$$

Nx: refractive index in longitudinal direction
Ny: refractive index in direction perpendicular to longitudinal direction and thickness direction

Nz: refractive index in thickness direction

The lower limit of the orientation coefficient ΔNx in the longitudinal direction of the polyolefin-based resin film of the present invention is 0.0150, more preferably 0.0180, and further preferably 0.0200. When the orientation coefficient ΔNx is 0.0150 or more, straight cuttability of the packaging body is easily obtained. The upper limit of the orientation coefficient ΔNx in the longitudinal direction is preferably 0.0250, more preferably 0.0245, further preferably 0.0240, still further preferably 0.0230, and particularly preferably 0.0220. When the orientation coefficient ΔNx is 0.0250 or less, the heat-seal strength is less likely to be reduced.

(Heat shrinkage ratio)

The upper limit of heat shrinkage ratio of the polyolefin-based resin film according to the present invention in the longitudinal direction at 120°C is 9%. If the heat shrinkage ratio in the longitudinal direction is 9% or less, tear strength is smaller, and the appearance of a packaging body is excellent due to small shrinkage during heat sealing or during retorting of the packaging body. The upper limit of the heat shrinkage ratio in the longitudinal direction is preferably 8%, more preferably 7%, even more preferably 6%, further preferably 5%, particularly preferably 4%.
The lower limit of heat shrinkage ratio of the polyolefin-based resin film according to the present invention in the longitudinal direction is 1%. If the heat shrinkage ratio in the longitudinal direction is 1% or more, tear strength is easily to be small.
The lower limit of heat shrinkage ratio in the longitudinal direction is preferably 2%.

(Moved from below)

In order to realize straight cuttability, the lower limit of the orientation coefficient ΔNx in the longitudinal direction needs to be 0.0150. However, when the upper limit of the heat shrinkage ratio at 120°C in the longitudinal direction is 9%, whiskers are less likely to occur. The reason is as follows. That is, when thermal melting is caused by heat-sealing, orientation is less likely to remain at the seal portion or the seal end. Thus, the film laminated with the base material film is less likely to shrink during the heat-sealing, because the film is restricted by the base material film. Accordingly, it is thought that force is less likely to be applied to the film, and thus, orientation is less likely to be caused again in the film.
The upper limit of the heat shrinkage ratio in the direction (width direction) at a right angle with respect to the longitudinal direction of the polyolefin-based resin film of the present invention is preferably 1%. When the heat shrinkage ratio is 1% or less, tear strength in the longitudinal direction is easily reduced, and straight cuttability is easily obtained. The upper limit of the heat shrinkage ratio is preferably 0.5%. The lower limit of the heat shrinkage ratio in the direction at a right angle with respect to the one direction of the polyolefin-based resin film of the present invention is -5%. When the heat shrinkage ratio is -5% or more, elongation occurs during heat-sealing, and appearance of the packaging body may be impaired. The lower limit of the heat shrinkage ratio is preferably -2%.

(Haze)

Haze was measured according to JIS K7136. Measurement was performed with N=3 with respect to the polyolefin-based resin film before being laminated, and an average value was calculated.
The upper limit of haze is preferably 80%, more preferably 70%, further preferably 60%, and still further preferably 50%. When haze is 80% or less, visibility of the contents is excellent. The lower limit of haze is preferably 20%.

(Tear strength)

The upper limit of tear strength of the polyolefin-based resin film according to the present invention in the longitudinal direction is preferably 0.30 N. If the teat strength in the longitudinal direction exceeds the above upper limit, there is a case where a laminated film is difficult to tear. The upper limit of the tear strength in the longitudinal direction is more preferably 0.16 N.
The lower limit of tear strength of the polyolefin-based resin film according to the present invention in the longitudinal direction is preferably 0.02 N. If the tear strength in the longitudinal direction is less than the above lower limit, there is a case where bag-breaking resistance deteriorates. The lower limit of the tear strength in the longitudinal direction is more preferably 0.03 N.

(Piercing strength)

The lower limit of piercing strength of the polyolefin-based resin film according to the present invention is preferably 10 N, more preferably 15 N/μm, further preferably 18 N, even more preferably 20 N. If the piercing strength is 15 N or more, a pin hole is less likely to be formed when a projection hits a packaging body. The upper limit of the piercing strength is not particularly limited, but is preferably 35 N. If the piercing strength is 35 N or less, handling of the film or a laminated body using the film is easy due to not too high resilience.

(Piercing strength)

The lower limit of piercing strength per 1 μm of the polyolefin-based resin film according to the present invention is preferably 0.13 N/μm, more preferably 0.15 N/μm. If the piercing strength is less than the above lower limit, there is a case where a pin hole is formed when a projection hits a packaging body. The upper limit of the piercing strength is preferably 0.40 N/μm. If the piercing strength exceeds the above upper limit, there is a case where handling of the film or a laminated body using the film is difficult due to too high resilience.

(Wetting tension)

The lower limit of wetting tension of the surface of the polyolefin-based resin film according to the present invention to be laminated on at least one film selected from the group consisting of a polyamide resin film, a polyester resin film, and a polypropylene resin film is preferably 30 mN/m, more preferably 35 mN/m. If the wetting tension is less than the above lower limit, there is a case where lamination strength reduces. The upper limit of the wetting tension is preferably 55 mN/m, more preferably 50 mN/m. If the wetting tension exceeds the above upper limit, there is a case where blocking occurs in the roll of the polyolefin-based resin film.

(Structure and production method of laminated body)

A laminated body using the polyolefin-based resin film according to the present invention is obtained by laminating the polyolefin-based resin film used as a sealant on at least one film selected from the group consisting of a polyamide resin film, a polyester resin film, and a polypropylene resin film. Further, by a known technique, for the purpose of imparting adhesiveness or barrier properties, the base film may be subjected to coating or vapor deposition, or aluminum foil may further be laminated on the base film. More specifically, the laminated film may have a structure such as biaxially-stretched PET film/aluminum foil/sealant, biaxially-stretched PET film/biaxially-stretched nylon film/sealant, biaxially-stretched nylon film/sealant, biaxially-stretched polypropylene film/sealant, or biaxially-stretched PET film/biaxially-stretched nylon film/aluminum foil/sealant. Among them, when a biaxially-stretched nylon film is laminated on a sealant having small orientation in the longitudinal direction, the straight cuttability of a resulting laminated body is significantly poor. When the polyolefin-based resin film of the present invention is used as a sealant, a laminated body having excellent straight cuttability can be produced whichever of the structures is selected.
A lamination method to be used may be a conventional method such as a dry lamination method or an extrusion lamination method, and a laminated body having excellent straight cuttability can be produced whichever of the lamination methods is used.

(Properties of laminated body)

(Tear strength)

The upper limit of tear strength in the longitudinal direction of the laminated body according to the present invention is preferably 0.50 N. If the teat strength is 0.50 N or less, the laminated body is easy to tear. The upper limit of the tear strength is more preferably 0.40 N, further preferably 0.35 N, even more preferably 0.30 N. The tear strength in the longitudinal direction may have a lower limit of 0.05 N.

(Straight cuttability)

Straight cuttability refers to the ability of a film or a laminated body to be torn straight in one direction. Measurement was performed by the following method. In the examples, stretching was performed in the longitudinal direction, and therefore the heat shrinkage ratio was high in the longitudinal direction, and the one direction was the longitudinal direction. Therefore, straight cuttability was evaluated only in the longitudinal direction.
A film or a laminated film was cut to obtain a strip sample whose size in the longitudinal direction was 150 mm and size in the direction perpendicular to the longitudinal direction was 60 mm. An incision of 30 mm was made in the center of the short-side edge of the sample along the longitudinal direction. The sample was torn in accordance with JIS K7128-1:1998. The sample was torn 120 mm excluding 30 mm of the incision in the longitudinal direction, and at this time, the distance of shift to the direction perpendicular to the longitudinal direction was measured and an absolute value thereof was recorded. The measurement was performed at N = 3 in both cases where a section on the observer's right side was held by an upper holder and where a section on the observer's left side was held by an upper holder, and an average value was calculated in each of the cases. The larger one of the right-side measurement result and the left-side measurement result was used.

(Straight cuttability)

The upper limit of straight cuttability of the laminated body according to the present invention is preferably 8 mm, more preferably 5 mm, further preferably 3 mm. If the straight cuttability is 8 mm or less, a packaging body is less likely to cause "Nakiwakare". The straight cuttability may have a lower limit of 0.5mm.

("Nakiwakare")

The upper limit of "Nakiwakare" of the laminated body of the present invention is not limited in particular, and is preferably 15 mm, more preferably 10 mm, further preferably 6 mm, and particularly preferably 5 mm. In a case where "Nakiwakare" is not larger than 15 mm, when the packaging body is torn, contents are less likely to be spilled. The lower limit may be 1 mm.

(Whisker occurrence rate)

Two sheets of a laminated film with the polyolefin resin film according to the present invention and the base film were heat-sealed in such a manner that their heat-seal film-side surfaces faced to each other to form a four-edge sealed bag whose inside dimension in the longitudinal direction was 120 mm and inside dimension in the direction perpendicular to the longitudinal direction was 170 mm. A notch was made at the edge of the four-edge sealed bad, and the bag was torn with fingers in the longitudinal direction. A whisker occurrence rate calculated from the number of times filamentous film pieces (whiskers) occurred and the number of times of tearing is preferably 30% or less, more preferably 25% or less, further preferably 20% or less, particularly preferably 16% or less, and most preferably 10% or less.

The polyolefin-based resin film of the present invention was dry-laminated on a base film (biaxially-stretched nylon film manufactured by TOYOBO CO., LTD., N1102, thickness: 15 $\mu$m, orientation angle: 22° with respect to the longitudinal direction) using an ester-based adhesive obtained by mixing 33.6 parts by weight of an ester-based adhesive for dry lamination (TM569 manufactured by Toyo-Morton, Ltd.), 4.0 parts by weight of a curing agent (CAT10L manufactured by Toyo-Morton, Ltd.), and 62.4 parts by weight of ethyl acetate so that the amount of the adhesive applied was 3.0 g/m$^2$. A laminated film obtained by lamination was maintained at 40°C for 3 days to perform aging. In this way, a laminated film was obtained. Whisker occurrence rate=the number of times of occurrence of whiskers/the number of times of tearing $\times$ 100(%)

(Finishing of bag-making)

Two sheets of a laminated film were stacked so that their polyolefin-based resin film-side surfaces faced to each other, and then heat-sealed at a pressure of 0.2 MPa and a heat-seal temperature of 220°C for 1 second using a seal bar having a width of 10 mm to form a four-edge sealed bag whose inside dimension in the MD direction was 120 mm and inside dimension in the TD direction was 170 mm. When the final conditions of the four-edge sealed bag were visually observed, the bag is preferable no deformation near the heat-sealed portion, and further the bag is preferable perfectly rectangle.

(Shrinkage ratio during retorting)

The upper limit of shrinkage ratio during retorting of the laminated body according to the present invention is preferably 5%. If the shrinkage ratio during retorting exceeds the above upper limit, there is a case where the appearance of a packaging body after retorting is poor. The upper limit of the shrinkage ratio during retorting is more preferably 4%. The lower limit of the shrinkage ratio during retorting in one direction is -5%. If the shrinkage ratio during retorting in the longitudinal direction is less than the above lower limit, there is a case where elongation after retorting is large, which may cause bag breaking. The lower limit of the shrinkage ratio during retorting in the longitudinal direction is more preferably -2%, even more preferably 0%.

(Heat-seal strength)

The lower limit of heat-seal strength of the laminated body according to the present invention before retorting is preferably 35 N/15 mm, more preferably 40 N/15 mm. If the heat-seal strength is less than the above lower limit, there is a case where bag-breaking resistance deteriorates. The heat-seal strength is preferably maintained at 35 N/15 mm or more even after retort treatment at 121°C for 30 minutes. The upper limit of the heat-seal strength is preferably 60 N/15 mm. In order to allow the heat-seal strength to exceed the above upper limit, for example, the thickness of the film needs to be increased, which may increase costs.

(Heat-sealing start temperature)

The lower limit of the heat-sealing start temperature before retorting the laminated body of the present invention is preferably 190°C or less, more preferably 185°C or less, and further preferably 180°C or less. When the temperature exceeds 190°C, shrinkage of the film during bag-making becomes large, whereby the appearance is impaired, and in addition, the bag-making speed may be decreased and the cost may be increased. The lower limit of the heat-seal temperature is preferably 150°C or more, and further preferably 160°C or more. When the heat-seal temperature is lower than the above lower limit, film inner surfaces may be fused by heat of retorting treatment.

(Packaging body)

The laminated body provided to enclose a food product or the like as a content to protect the content from dirt or gas derived from nature is referred to as a packaging body. The packaging body is produced by, for example, cutting the laminated body and bonding inner surfaces of the laminated body to each other by a hot heat-seal bar or ultrasonic waves to form a bag. For example, a four-edge sealed bag is widely used which is produced by stacking rectangular two sheets of the laminated body in such a manner that their sealant-side surfaces face to each other and heat-sealing four edges. The content may be a food product, but may also be another product such as a daily product. The packaging body may be one having a shape other than a rectangular shape, such as a standing pouch or a pillow packaging body.
Further, a packaging body capable of withstanding heat of thermal sterilization using hot water at 100°C or more obtained by pressurization for boiling point elevation is referred to as a packaging body for retort applications. A film intended to provide such a packaging body is referred to as a film for retort applications.

(Bag-breaking resistance)

A four-edge sealed bag formed from the laminated body of the present invention is repeatedly dropped until the bag breaks to measure the number of times of dropping. The number of times of dropping when 50% of the bags remain without breaking is preferably 5 times or more, more preferably 10 times or more, further preferably 11 times or more, even more preferably 12 times or more, from a practical viewpoint.

EXAMPLES

Hereinbelow, the present invention will be described in detail with reference to examples, but is not limited to these examples. The properties of products obtained in the examples were measured and evaluated by the following methods. In the evaluations, a longitudinal direction and a direction perpendicular to the longitudinal direction (a width direction) in film production were defined as a MD direction and a TD direction, respectively.

(1) Resin density

A density was evaluated in accordance with Method D of JIS K7112:1999 (density-gradient tube).
The measurement was performed at N = 3, and an average value was calculated.

(2) Melt flow rate (MFR)

A melt flow rate was measured at 230°C and a load of 2.16 kg on the basis of JIS K-7210-1. The measurement was performed at N = 3, and an average value was calculated.

(3) Heat shrinkage ratio

A film before lamination was cut to obtain a 120-mm square sample. Gauge lines were drawn at an interval of 100 mm in each of the MD direction and the TD direction. The sample was hung in an oven maintained at 120°C for 30 minutes to be subjected to heat treatment. A distance between the gauge lines was measured, and a heat shrinkage ratio was calculated by the following formula. The measurement was performed at N = 3, and an average value was calculated.

$$\text{Heat shrinkage ratio} = (\text{gauge length before heat treatment} - \text{gauge length after heat treatment})/\text{gauge length before heat treatment} \times 100\ (\%)$$

(4) Tear strength

A tear strength was measured in accordance with JIS K7128-1:1998. Evaluation was performed on a base film before lamination and a laminated film. The measurement was performed at N = 3 in each of the MD direction and the TD direction, and an average value was calculated.

(5) Orientation coefficient in longitudinal direction

The refractive index was evaluated according to Test methods for refractive index of chemical products of JIS K 0062:1999. Measurement was performed with N=3, and an average value was calculated. The orientation coefficient $\Delta Nx$ in the longitudinal direction was calculated by formula 1.

$$\Delta Nx = Nx - (Ny + Nz)/2\ \text{(formula 1)}$$

Nx: refractive index in the longitudinal direction
Ny: refractive index in direction perpendicular to the longitudinal direction and thickness direction
Nz: refractive index in thickness direction

(6) Straight cuttability

Straight cuttability refers to the ability of a laminated film (a laminated body) to be torn straight in one direction. Measurement was performed by the following method. In the examples, stretching was performed in the MD direction, and therefore the thermal shrinkage ratio was high in the MD direction, and the one direction was the MD direction. Therefore, straight cuttability was evaluated only in the MD direction.
A laminated film was cut to obtain a strip sample whose size in the MD direction was 150 mm and size in the TD direction was 60 mm. An incision of 30 mm was made in the center of the short-side edge of the sample along the MD direction. The sample was torn in accordance with JIS K7128-1:1998. The sample was torn 120 mm excluding 30 mm of the incision in the MD direction, and at this time, the distance of shift to the TD direction was measured and an absolute value thereof was recorded. The measurement was performed at N = 3 in both cases where a section on the observer's right side was held by an upper holder and where a section on the observer's left side was held by an upper holder, and an average value was calculated in each of the cases. The larger one of the right-side measurement result and the left-side measurement result was used.

(7) "Nakiwakare"

Two sheets of a laminated film were heat-sealed in such a manner that their heat-seal film-side surfaces faced to each other to form a four-edge sealed bag whose inside dimension in the MD direction was 120 mm and inside dimension in the TD direction was 170 mm. A notch was made at the edge of the four-edge sealed bad, and the bag was torn with fingers in the MD direction. The bag was cut to the opposite edge, and a gap between the tear lines of the front-side film and the back-side film of the bag was measured. The measurement was performed at N = 3 in each of directions in which the right-hand side was the near side and in which the left-hand side was the near side, and an average value was calculated. The larger one of the measured values was used.

(8) Shrinkage ratio during retorting

A laminated film was cut to obtain a 120-mm square piece. Gauge lines were drawn at an interval of 100 mm in each of the MD direction and the TD direction. Retort treatment was performed with hot water at 121°C for 30 minutes.

A distance between the gauge lines was measured, and a shrinkage ratio during retorting was measured by the following formula. The measurement was performed at N = 3 in each of the directions, and an average value was calculated.

$$\text{Shrinkage ratio during retorting} = (\text{gauge length before treatment} - \text{gauge length after treatment})/\text{gauge length before treatment} \times 100 \ (\%)$$

(9) Heat-seal strength

Conditions for heat-sealing and conditions for strength measurement are as follows. Two sheets of a laminated film obtained in Example or Comparative Example were stacked so that their polyolefin-based resin film-side surfaces faced to each other, heat-sealed at a pressure of 0.2 MPa and a heat-seal temperature of 220°C for 1 second using a seal bar having a width of 10 mm, and allowed to stand to cool. Next, retort treatment was performed using hot water at 121°C for 30 minutes. Test pieces having a size in the MD direction of 80 mm and a size in the TD direction of 15 mm were cut out from each of the films heat-sealed at different temperatures, and the heat-sealed portion of each of the test pieces was subjected to peeling at a cross head speed of 200 mm/min to measure peel strength. As a test machine, a universal testing machine 5965 manufactured by Instron was used. The measurement was performed at N = 3 at each heat-seal temperature, and an average value was calculated.

(10) Heat-seal start temperature

A heat-seal start temperature is an item related to productivity at the time when continuous production using a bag-making machine is assumed. Excellent suitability for bag making means that satisfactory sealing performance can be achieved within a temperature range where shrinkage or breakage of a base film does not occur. Evaluation of heat-seal temperature was performed in the following manner.
In the above-described measurement of heat-seal strength, heat-seal strength was measured while the temperature of a heat-seal bar was changed at a pitch of 5°C. The measurement was performed at N = 3 at each heat-seal bar temperature. A weighted average of the heat-seal temperature at a temperature just before exceeding 30 N and the heat-seal temperature at a temperature just after exceeding 30 N was calculated.

(11) Whisker occurrence rate

Two sheets of a laminated film were heat-sealed in such a manner that their heat-seal film-side surfaces faced to each other to form a four-edge sealed bag whose inside dimension in the MD direction was 120 mm and inside dimension in the TD direction was 170 mm. A notch was made at the edge of the four-edge sealed bad, and the bag was torn with fingers in the MD direction. The occurrence rate was calculated based on the number of times filamentous film pieces (whiskers) occurred. The measurement was performed at n = 100 in each of directions in which the right-hand side was the near side and in which the left-hand side was the near side, and the larger measurement values were adopted.

$$\text{Whisker occurrence rate} = \text{the number of times of occurrence of whiskers}/\text{the number of times of tearing} \times 100 (\%)$$

(12) Finishing of bag-making

Two sheets of a laminated film were stacked so that their polyolefin-based resin film-side surfaces faced to each other, and then heat-sealed at a pressure of 0.2 MPa and a heat-seal temperature of 220°C for 1 second using a seal bar having a width of 10 mm to form a four-edge sealed bag whose inside dimension in the MD direction was 120 mm and inside dimension in the TD direction was 170 mm. The final conditions of the four-edge sealed bag were visually observed.

o: The bag was perfectly rectangle without deformation near the heat-sealed portion.
Δ: There was a little deformation near the heat-sealed portion.
×: There was a large deformation near the heat-sealed portion so that the edges of the bag were wavy.

(13) Bag-breaking resistance

Two sheets of a laminated film were cut out to form a four-edge sealed bag containing 300 mL of saturated saline and having inside dimensions of 170 mm (length) and 120 mm (width). At this time, heat-sealing was performed for 1 second under conditions of a pressure of 0.2 MPa, a seal bar width of 10 mm, and a heat-seal temperature of 220°C. After the bag making, the edges of the four-edge sealed bag were trimmed so that a seal width was 5 mm. The four-edge sealed bag was subjected to retorting at 121°C for 30 minutes. Then, the four-edge sealed bag was allowed to stand in an environment at -5°C for 8 hours, and was dropped onto a flat concrete floor from a height of 1.0 m in such an environment. The four-edge sealed bag was repeatedly dropped until it broke to measure the number of times of repeated dropping. The following criteria were provided. The number of bags for each grade was 20.

◎: The number of times of dropping to achieve a survival rate of 50% was 13 times or more.
o: The number of times of dropping to achieve a survival rate of 50% was 10 times or more and 12 times or less.
△: The number of times of dropping to achieve a survival rate of 50% was 5 times or more and 9 times or less.
×: The number of times of dropping to achieve a survival rate of 50% was 4 times or less.

(14) Orientation angle

The orientation angle (°) of a base film was measured using a molecular orientation analyzer, MOA-6004 manufactured by Oji Scientific Instruments Co., Ltd. A sample whose size in the MD direction was 120 mm and size in the TD direction was 100 mm was cut out and set in the measuring instrument, and a measured value of angle was defined as an orientation angle. It is to be noted that the MD direction is 0°. The measurement was performed at N = 3, and an average value was calculated.

(15) Piercing strength

The piercing strength of a film before lamination or a laminated body was measured at 23°C in accordance with "2. Strength testing method" in "Chapter 3: Apparatuses, containers, and packaging in the Specifications and standards for foods, food additives, etc." (Public Notice of the Ministry of Health, Labour, and Welfare No. 20 of 1982) in Food Sanitation Act. A needle whose tip had a diameter of 0.7 mm pierced the film at a piercing speed of 50 mm/min to measure strength when the needle passed through the film. The obtained measured value was divided by the thickness of the film to calculate piercing strength ($N/\mu m$) per micrometer of the film. The measurement was performed at N = 3, and an average value was calculated.

(Example 1)

(Polyolefin-based resin film)

(Raw material used)

With respect to polypropylene-based resin films of Examples 1 to 7 and Comparative Examples 1 to 10, raw materials were adjusted on the basis of resin compositions and proportions thereof of each layer shown in Table 1 and Table 2 described later. These raw materials were mixed so as to be uniform, whereby a mixed raw material for manufacturing a polyolefin-based resin film was obtained.

1) Raw material A: Propylene-ethylene block copolymer WFS5293-22 manufactured by Sumitomo Chemical Co., Ltd. (ethylene content: 7 wt%, resin density: 891 $kg/m^3$, MFR at 230°C and 2.16 kg: 3.0 g/10 min, melting point: 164°C)
2) Raw material B: Ethylene-propylene copolymer elastomer TAFMER P0480 manufactured by Mitsui Chemicals, Inc. (propylene content: 27 wt%, resin density: 870 $kg/m^3$, MFR at 230°C and 2.16 kg: 1.8 g/10 min, melting point: 48°C)
3) Raw material C: Propylene-ethylene random copolymer S131 manufactured by Sumitomo Chemical Co., Ltd. (ethylene content: 5.5 wt%, resin density: 890 $kg/m^3$, MFR at 230°C and 2.16 kg: 1.5 g/10 min, melting point: 132°C, Ziegler-Natta catalyst)
4) Raw material D: Propylene-ethylene random copolymer WFW4M manufactured by Japan Polypropylene Corporation (ethylene content: 7 wt%, resin density: 900 $kg/m^3$, MFR at 230°C and 2.16 kg: 7.0 g/10 min, melting point: 136°C, metallocene catalyst)
5) Raw material E: Propylene-ethylene random copolymer WFX4M manufactured by Japan Polypropylene Corporation (ethylene content: 7 wt%, resin density: 900 $kg/m^3$, MFR at 230°C and 2.16 kg: 7.0 g/10 min, melting point:

125°C, metallocene catalyst)

(Melt extrusion)

The mixed raw material to be used in the intermediate layer was introduced by using a 3-stage-type single-screw extruder having a screw diameter of 90 mm, and the mixed raw material for the laminate layer and the mixed raw material for the heat-seal layer were respectively introduced by using 3-stage-type single-screw extruders having a diameter of 45 mm and a diameter of 65 mm, such that the order of laminate layer/intermediate layer/heat-seal layer was realized. The raw materials were introduced to a T slot-type die designed such that: a preland was formed with two stages so as to have a width of 800 mm; and the shape of the step portion was curved so as to cause the flow of the melted resin to be uniform, thereby causing the flow in the die to be uniform. The extrusion was performed at an outlet temperature of the die being 230°C. The thickness ratios of the laminate layer/intermediate layer/heat-seal layer were 25%/50%/25%, respectively.

(Cooling)

A melted resin sheet extruded through the die was cooled by a cooling roll at 21°C to obtain an unstretched polyolefin-based resin film having a thickness of 210 ($\mu$m). During the cooling using the cooling roll, air trapping between the melted resin sheet and the cooling roll was prevented by allowing air nozzles to fix both ends of the film on the cooling roll, allowing an air knife to press the melted resin sheet against the cooling roll over the entire width thereof, and at the same time operating a vacuum chamber. The air nozzles for fixing both edges of the film were provided in series in the longitudinal direction of the film. The die was surrounded with a sheet to prevent the melted resin sheet from being exposed to wind.

(Pre-heating)

The unstretched sheet was guided to heated rolls to pre-heat the sheet by contact with the rolls. The temperature of the pre-heating rolls was set to 105°C. Both surfaces of the film were pre-heated using the rolls.

(Longitudinal direction stretching)

The unstretched sheet was guided to a longitudinal stretching machine and stretched 3.5 times using a speed difference between rolls to have a thickness of 60 $\mu$m. The temperature of the stretching rolls was set to 105°C.

(Annealing treatment)

Heat treatment was performed at 130°C using annealing rolls. Both surfaces of the film were subjected to heat treatment using the rolls.

(Relaxation step)

The speed of the roll provided downstream of the annealing rolls was reduced by 5% as a relaxation rate relative to that of the annealing roll, whereby the film was allowed to be relaxed.

(Corona treatment)

One surface (lamination surface) of the film was subjected to corona treatment.

(Winding)

As for the film manufacturing speed, the winding roll speed was set to 20 m/minute. The ear portion of the manufactured film was trimmed and the film was wound into a roll. The thickness of the obtained film was 60 $\mu$m.

(Production of laminated film)

A polyolefin-based resin film obtained in Example 1 was dry-laminated on a base film (biaxially-stretched nylon film manufactured by TOYOBO CO., LTD., N1102, thickness: 15 $\mu$m, orientation angle: 22° with respect to the MD direction) using an ester-based adhesive obtained by mixing 33.6 parts by weight of an ester-based adhesive for dry lamination (TM569 manufactured by Toyo-Morton, Ltd.), 4.0 parts by weight of a curing agent (CAT10L manufactured by Toyo-Morton, Ltd.), and 62.4 parts by weight of ethyl acetate so that the amount of the adhesive applied was 3.0 g/m$^2$. A laminated film obtained by lamination was maintained at 40°C for 3 days to perform aging. In this way, a laminated film was obtained.

(Example 2)

A polyolefin-based resin film of 60 $\mu$m was obtained by the same method as in Example 1 except that the raw materials shown in Table 1 were used, the thickness of an unstretched polyolefin-based resin film was set to 228 $\mu$m, the longitudinal stretch ratio was set to 3.8 times, and the relaxation rate in the relaxation step was set to 7%. A laminated body was obtained in the same manner as in Example 1.

(Example 3)

A polyolefin-based resin film of 60 $\mu$m was obtained by the same method as in Example 1 except that the raw materials shown in Table 1 were used and the relaxation rate in the relaxation step was set to 7%. A laminated body was obtained in the same manner as in Example 1.

(Example 4)

A polyolefin-based resin film of 60 $\mu$m was obtained by the same method as in Example 1 except that the raw materials shown in Table 1 were used, the thickness of an unstretched polyolefin-based resin film was set to 228 $\mu$m, and the longitudinal stretch ratio was set to 3.8 times. A laminated body was obtained in the same manner as in Example 1.

(Example 5)

A polyolefin-based resin film of 60 $\mu$m was obtained by the same method as in Example 1 except that the raw materials shown in Table 1 were used and the relaxation rate in the relaxation step was set to 6%. A laminated body was obtained in the same manner as in Example 1.

(Example 6)

A polyolefin-based resin film of 60 $\mu$m was obtained by the same method as in Example 1 except that the raw materials shown in Table 1 were used, the thickness of an unstretched polyolefin-based resin film was set to 228 $\mu$m, and the longitudinal stretch ratio was set to 3.8 times. A laminated body was obtained in the same manner as in Example 1.

(Example 7)

A polyolefin-based resin film of 60 $\mu$m was obtained by the same method as in Example 1 except that the raw materials shown in Table 1 were used, the thickness of an unstretched polyolefin-based resin film was set to 186 $\mu$m, and the longitudinal stretch ratio was set to 3.1 times. A laminated body was obtained in the same manner as in Example 1.

(Comparative Examples 1 and 2)

A polyolefin-based resin film of 60 $\mu$m was obtained by the same method as in Example 1 except that the raw materials shown in Table 2 were used, the thickness of an unstretched polyolefin-based resin film was set to 60 $\mu$m, and longitudinal stretch, annealing treatment, and relaxation step are not provided. A laminated body was obtained in the same manner as in Example 1.

(Comparative Example 3)

A polyolefin-based resin film of 60 $\mu$m was obtained by the same method as in Example 1 except that the raw materials shown in Table 2 were used, the thickness of an unstretched polyolefin-based resin film was set to 240 $\mu$m, the longitudinal stretch ratio was set to 4.0 times, and relaxation step are not provided. A laminated body was obtained in the same manner as in Example 1.

(Comparative Example 4)

A polyolefin-based resin film of 60 $\mu$m was obtained by the same method as in Example 1 except that the raw materials shown in Table 2 were used, the thickness of an unstretched polyolefin-based resin film was set to 270 $\mu$m, the longitudinal stretch ratio was set to 4.5, the temperature of annealing treatment was set to 120 °C, and relaxation step is not provided. A laminated body was obtained in the same manner as in Example 1.

(Comparative Example 5)

A polyolefin-based resin film of 60 $\mu$m was obtained by the same method as in Example 1 except that the raw materials shown in Table 2 were used, the thickness of an unstretched polyolefin-based resin film was set to 120 $\mu$m, the longitudinal stretch ratio was set to 2.0 times, the temperature of annealing treatment was set to 120 °C, and relaxation step is not provided. A laminated body was obtained in the same manner as in Example 1.

(Comparative Example 6)

A polyolefin-based resin film of 60 $\mu$m was obtained by the same method as in Example 1 except that the raw materials shown in Table 2 were used, the thickness of an unstretched polyolefin-based resin film was set to 186 $\mu$m, the longitudinal stretch ratio was set to 3.1 times, the temperature of annealing treatment was set to 120 °C, and relaxation step is not provided. A laminated body was obtained in the same manner as in Example 1.

(Comparative Example 7)

A polyolefin-based resin film of 60 $\mu$m was obtained by the same method as in Example 1 except that relaxation step is not provided. A laminated body was obtained in the same manner as in Example 1.

(Comparative Example 8)

A polyolefin-based resin film of 60 $\mu$m was obtained by the same method as in Example 1 except that annealing treatment and relaxation step after stretching are not provided. A laminated body was obtained in the same manner as in Example 1.

(Comparative Example 9)

A polyolefin-based resin film of 60 $\mu$m was obtained by the same method as in Example 1 except that the raw materials shown in Table 2 were used, the thickness of an unstretched polyolefin-based resin film was set to 150 $\mu$m, and the longitudinal stretch ratio was set to 2.5 times. A laminated body was obtained in the same manner as in Example 1.

(Comparative Example 10)

A polyolefin-based resin film of 60 $\mu$m was obtained by the same method as in Example 1 except that the raw materials shown in Table 2 were used, the thickness of an unstretched polyolefin-based resin film was set to 300 $\mu$m, and the longitudinal stretch ratio was set to 5.0 times. A laminated body was obtained in the same manner as in Example 1.

In each of Comparative Examples 1 and 2, since the film was an unstretched film, straight cuttability was inferior.

In Comparative Example 3, since the stretch ratio was high and the x-axis orientation coefficient of the film was large, whiskers easily occurred at the time of opening. In addition, since there was no relaxation after annealing, thermal dimensional stability was inferior.

In Comparative Example 4, since at least the heat-seal layer did not contain an ethylene-propylene random copolymer and the stretch ratio was high, low-temperature sealability was inferior.

In Comparative Example 5, since the stretch ratio was low and the x-axis orientation coefficient of the film was small, straight cuttability was inferior.

In Comparative Examples 6 to 8, since there was no relaxation after annealing, thermal dimensional stability was inferior.

In Comparative Example 9, since the x-axis orientation coefficient was small, straight cuttability was inferior.

In Comparative Example 10, since the x-axis orientation coefficient was large, whiskers easily occurred at the time of opening.

Table 1 and Table 2 show the above results.

[Table 1]

| | | Example 1 | Example 2 | Example 8 | Example 4 | Example 6 | Example 8 | Example 7 |
|---|---|---|---|---|---|---|---|---|
| Laminate layer and Intermediate layer | Raw material A, parts by weight | 64 | 64 | 64 | 64 | 94 | 94 | 64 |
| | Raw material B, parts by weight | 6 | 6 | 6 | 6 | 6 | 6 | 6 |
| | Raw material C, parts by weight | 30 | 30 | - | - | - | - | 30 |
| | Raw material D, parts by weight | - | - | 80 | - | - | - | - |
| | Raw material E, parts by weight | - | - | - | 30 | - | - | - |
| Heat-seal layer | Raw material A, parts by weight | 64 | 64 | 64 | 64 | 64 | 74 | 64 |
| | Raw material B, parts by weight | 6 | 6 | 6 | 6 | 6 | 6 | 8 |
| | Raw material C, parts by weight | 30 | 80 | - | - | 30 | - | 80 |
| | Raw material D, parts by weight | - | - | 30 | - | - | - | - |
| | Raw material E, parts by weight | - | - | - | 80 | - | 20 | - |

(continued)

| | | unit | Example 1 | Example 2 | Example 8 | Example 4 | Example 6 | Example 8 | Example 7 |
|---|---|---|---|---|---|---|---|---|---|
| Layer thickness | Laminate layer | μm | 15 | 16 | 16 | 16 | 16 | 16 | 16 |
| | Intermediate layer | μm | 30 | 80 | 30 | 30 | 30 | 80 | 80 |
| | Heat-seal layer | μm | 16 | 16 | 16 | 16 | 16 | 16 | 16 |
| | Total | μm | 60 | 60 | 60 | 60 | 60 | 60 | 60 |
| Preheating temperature | | °C | 106 | 106 | 106 | 106 | 106 | 106 | 106 |
| Stretch temperature | | °C | 106 | 106 | 106 | 106 | 106 | 106 | 106 |
| Stretch direction | | - | longitudinal | longitudinal | longitudinal | longitudinal | longitudinal | longitudinal | longitudinal |
| Stretch ratio 10 | | times | 3.6 | 3.8 | 3.5 | 3.8 | 3.5 | 3.8 | 3.1 |
| Longitudinal relaxation rate | | % | 6 | 7 | 7 | 6 | 6 | 6 | 6 |
| Annealing treatment temperature | | °C | 130 | 130 | 180 | 130 | 130 | 130 | 180 |
| $\Delta Nx$ | | - | 0.0208 | 0.0219 | 0.0221 | 0.0222 | 0.0218 | 0.0226 | 0.0190 |
| Heat shrinkage ratio 120°C, 30min | Longitudinal direction | % | 5.1 | 6.9 | 3.8 | 4.2 | 4.7 | 3.5 | 4.5 |
| | Width direction | % | 0.0 | 0.5 | 0.2 | 0.1 | 0.1 | 0.1 | 0.2 |
| Haze | | % | 42.4 | 47.0 | 66.8 | 69.1 | 44.8 | 58.2 | 48.0 |
| Tear strength | Longitudinal direction | N | 0.17 | 0.15 | 0.10 | 0.12 | 0.13 | 0.11 | 0.25 |
| | Width direction | N | not measured * | not measured * | not measured* | not measured * | not measured * | not measured * | not measured * |
| Piercing strength | | N | 20.6 | 21.0 | 19.9 | 20.8 | 20.8 | 21.6 | 19.8 |
| | | N/μm | 0.34 | 0.35 | 0.33 | 0.35 | 0.86 | 0.36 | 0.32 |
| Wetting tension | Corona treated surface | mN/m | 42 | 42 | 42 | 42 | 42 | 42 | 42 |

| | | | Example 1 | Example 2 | Example 8 | Example 4 | Example 6 | Example 8 | Example 7 |
|---|---|---|---|---|---|---|---|---|---|
| Finishing of bag-making* | | - | ○ | ○ | ○ | ○ | ○ | ○ | ○ |
| Heat-seal strength* | Longitudinal direction | N/16mm | 46 | 42 | 42 | 44 | 44 | 43 | 46 |
| Heat-sealing start temperature' | Longitudinal direction | °C | 176 | 178 | 172 | 176 | 176 | 179 | 174 |
| Bag-breaking res istance* | | - | ○ | ○ | ○ | ○ | ○ | ○ | ○ |
| Shrinkage ratio during retorting* 121°C, 30min | Longitudinal direction | % | 3.2 | 3.8 | 2.8 | 2.4 | 3.0 | 2.9 | 2.8 |
| | Width direction | % | 0.9 | 1.0 | 1.0 | 0.7 | 0.8 | 0.9 | 1.0 |
| Straight cuttability* | Longitudinal direction | mm | 2 | 8 | 2 | 1 | 2 | 1 | 4 |
| Phenomenon called "Nakiwakare"* | Longitudinal direction | mm | 4 | 4 | 4 | 8 | 4 | 3 | 8 |
| Tear strength* | Longitudinal direction | N | 0.38 | 0.30 | 0.25 | 0.28 | 0.32 | 0.29 | 0.20 |
| | Width direction | N | not measured * | not measured * | not measured * | not measured * | not measured * | not measured * | not measured * |
| Whisker occurrence rate* | Longitudinal direction | % | 16 | 27 | 8 | 7 | 18 | 12 | 2 |

* is evaluation at a laminated body
"Not measured*" denotes that the film was broken in the stretch direction and no measurement value was obtained.

[Table 2]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Laminate layer and Intermediate layer | Raw material A | parts by weight | 64 | 94 | 64 | 94 | 94 | 94 | 64 | 64 | 64 | 64 |
| | Raw material B | parts by weight | 6 | 6 | 6 | 6 | 6 | 6 | 6 | 6 | 6 | 6 |
| | Raw material C | parts by weight | 30 | - | 30 | - | - | - | 30 | 30 | 30 | 30 |
| | Raw material D | parts by weight | - | - | - | - | - | - | - | - | - | - |
| | Raw material E | parts by weight | - | - | - | - | - | - | - | - | - | - |
| Heat-seal layer | Raw material A | parts by weight | 64 | 94 | 64 | 94 | 94 | 94 | 64 | 64 | 64 | 64 |
| | Raw material B | parts by weight | 6 | 6 | 6 | 6 | 6 | 6 | 6 | 6 | 6 | 6 |
| | Raw material C | parts by weight | 30 | - | 30 | - | - | - | 30 | 30 | 30 | 30 |
| | Raw material D | parts by weight | - | - | - | - | - | - | - | - | - | - |
| | Raw material E | parts by weight | - | - | - | - | - | - | - | - | - | - |

| | | | Compara-tive Example 1 | Compara-tive Example 2 | Compara-tive Example 3 | Compara-tive Example 4 | Compara-tive Example 6 | Compara-tive Example 6 | Compara-tive Example 7 | Compara-tive Example 8 | Compara-tive Example 9 | Compara-tive Example 10 |
|---|---|---|---|---|---|---|---|---|---|---|---|---|
| Layer thick-ness | Laminate layer | μm | 15 | 15 | 15 | 15 | 15 | 15 | 15 | 15 | 16 | 15 |
| | Intermedi-ate layer | μm | 30 | 30 | 30 | 30 | 30 | 30 | 30 | 30 | 30 | 30 |
| | Heat-seal layer | μm | 16 | 15 | 16 | is | is | is | 15 | 15 | 16 | 15 |
| | Total | μm | 60 | 60 | 60 | 60 | 60 | 60 | 60 | 60 | 60 | 60 |
| Preheating temperature | | °C | - | - | 106 | 90 | 105 | 105 | 105 | 105 | 105 | 106 |
| Stretch temperature | | °C | - | - | 106 | 105 | 106 | 106 | 106 | 106 | 106 | 106 |
| Stretch direction | | - | - | - | longitudinal | longitudinal | longitudinal | longitudinal | longitudinal | longitudinal | longitudinal | longitudinal |
| Stretch ratio | | times | not stretch-ing | not stretch-ing | 4.0 | 4.5 | 2.0 | 3.1 | 3.5 | 3.5 | 2.5 | 5.0 |
| Longitudinal relaxation rate | | % | - | - | 0 | 0 | 0 | 0 | 0 | 0 | 6 | 6 |
| Annealing treatment temperature | | °C | - | - | 130 | 120 | 120 | 120 | 130 | | 130 | 130 |
| x-axis orienta-tion | $\Delta Nx$ | - | 0.0010 | 0.0011 | 0.0226 | 0.0261 | 0.0090 | 0.0194 | 0.0210 | 0.0222 | 0.0134 | 0.0322 |
| Heat shrinkage ratio 120°C, 30min | Longitudinal direction | % | 0.2 | 0.2 | 10.3 | 6.0 | 8.6 | 14.9 | 9.2 | 28.6 | 2.8 | 3.8 |
| | Width direction | % | 0.6 | 0.8 | 0.2 | 0.1 | 0.8 | 0.2 | 0.3 | 2.1 | 0.1 | 0.1 |
| Haze | | % | 46.4 | 60.1 | 48.6 | 50.3 | 46.5 | 47.6 | 43.6 | 44.8 | 48.2 | 69.6 |
| Tear strength | Longitudinal direction | N | 3.36 | 3.20 | 0.14 | 0.10 | 0.36 | 0.24 | 0.15 | 0.44 | 0.36 | 0.1 |
| | Width direction | N | 7.84 | 7.30 | not meas-ured * | not meas-ured * | 6.18 | not meas-ured * | not meas-ured * | not meas-ured * | 6.24 | not meas-ured * |

(continued)

| | | | Compara-tive Example 1 | Compara-tive Example 2 | Compara-tive Example 3 | Compara-tive Example 4 | Compara-tive Example 5 | Compara-tive Example 6 | Compara-tive Example 7 | Compara-tive Example 8 | Compara-tive Example 9 | Compara-tive Example 10 |
|---|---|---|---|---|---|---|---|---|---|---|---|---|
| Piercing strength | | N | 12.1 | 13.7 | 21.6 | 23.0 | 16.9 | 19.5 | 20.7 | 10.8 | 19.2 | 21.1 |
| | | N/$\mu$m | 0.20 | 0.28 | 0.86 | 0.38 | 0.28 | 0.33 | 0.36 | 0.18 | 0.82 | 0.35 |
| Wetting ten-sion | Corona treated sur-face | mN/m | 42 | 42 | 42 | 42 | 42 | 42 | 42 | 42 | 42 | 42 |
| Finishing of bag-making* | | - | ○ | | Δ | ○ | ○ | ○ | ○ | × | ○ | ○ |
| Heat-seal strength* | Longitudinal direction | N/16mm | 44 | 46 | 43 | 41 | 44 | 44 | 46 | 43 | 45 | 43 |
| Heat-seal start temperature* | Longitudinal direction | °C | 161 | 171 | 179 | 192 | 171 | 174 | 176 | 174 | 170 | 178 |
| Bag-breaking resistance* | | - | ◎ | ◎ | ◎ | ○ | ○ | ○ | ○ | ◎ | ○ | ○ |
| Shrinkage ra-tio during re-torting* 121°C, 30min | Longitudinal direction | % | 3.5 | 3.5 | 4.0 | 2.6 | 3.2 | 6.3 | 3.6 | 14.3 | 2.1 | 3.2 |
| | Width direction | % | 6.0 | 5.8 | 1.0 | 1.2 | 1.6 | 2.2 | 1.7 | 2.1 | 0.8 | 1.1 |
| Straight cuttability* | Longitudinal direction | mm | 30 or more | 30 or more | 1 | 1 | 10 | 4 | 2 | 1 | 10 | 1 |
| Phenomenon called "Nakiwakare"* | Longitudinal direction | mm | 67 | 73 | 3 | 3 | 28 | 6 | 4 | 4 | 22 | 3 |
| Tear strength* | Longitudinal direction | N | 1.80 | 1.50 | 0.28 | 0.10 | 0.88 | 0.19 | 0.36 | 0.71 | 0.73 | 0.29 |
| | Width direction | N | 10.21 | 8.67 | not meas-ured * | not meas-ured * | 6.18 | not meas-ured * | not meas-ured * | not meas-ured * | not meas-ured * | not meas-ured * |

| | | | Compara-tive Example 1 | Compara-tive Example 2 | Compara-tive Example 3 | Compara-tive Example 4 | Compara-tive Example 6 | Compara-tive Example 6 | Compara-tive Example 7 | Compara-tive Example 8 | Compara-tive Example 9 | Compara-tive Example 10 |
|---|---|---|---|---|---|---|---|---|---|---|---|---|
| Whisker oc-currence rate* | Longitudinal direction | % | 0 | 0 | 35 | 48 | 0 | 2 | 20 | 24 | 0 | 64 |
| * is evaluation at a laminated body<br>"Not measured*" denotes that the film was broken in the stretch direction and no measurement value was obtained. | | | | | | | | | | | | |

In Tables 1 and 2 showing the evaluation results, "not measured*" means that the film was torn in the MD direction during property evaluation so that a measured value was not obtained.

INDUSTRIAL APPLICABILITY

According to the present invention, it is possible to provide a retort pouch that is straight cuttable with slight occurrence of a phenomenon called "Nakiwakare" in a cutting direction and that is less likely to have occurrence of whiskers at the time of opening of the packaging bag. Therefore, the present invention can significantly contribute to industry.

**Claims**

1. A polyolefin-based resin film formed from a polypropylene-based resin composition, the polyolefin-based resin film containing:
in a total of 100 parts by weight of a polypropylene-based resin,

   40 to 97 parts by weight of a propylene-ethylene block copolymer;
   0 to 50 parts by weight of a propylene-$\alpha$ olefin random copolymer or a propylene homopolymer; and
   3 to 10 parts by weight of at least one type of an elastomer selected from the group consisting of an ethylene-propylene copolymer elastomer, a propylene-butene copolymer elastomer, and an ethylene-butene copolymer elastomer, wherein
   a heat shrinkage ratio in a longitudinal direction is not lower than 1% and not higher than 9%, and
   an x-axis orientation coefficient $\Delta$Nx calculated from a refractive index is not less than 0.0150 and not larger than 0.0250.

2. The polyolefin-based resin film according to claim 1, comprising a configuration of a plurality of layers including at least two layers.

3. A laminated body comprising the polyolefin-based resin film according to claim 1 or 2 and at least one type of a base material film selected from the group consisting of a polyamide resin film, a polyester resin film, and a polypropylene resin film.

4. The laminated body according to claim 3, wherein
a straight cuttability is not larger than 5 mm.

5. A packaging body formed from the laminated body according to claim 4.

6. The packaging body according to claim 5 for use in retorting.

# INTERNATIONAL SEARCH REPORT

| International application No. |
|---|
| PCT/JP2021/012697 |

**A. CLASSIFICATION OF SUBJECT MATTER**
Int.Cl. C08J5/18(2006.01)i, B32B27/32(2006.01)i, B65D65/40(2006.01)i,
B29C55/04(2006.01)n, B29K23/00(2006.01)n
FI: C08J5/18CES, B32B27/32Z, B65D65/40D, B29C55/04, B29K23:00
According to International Patent Classification (IPC) or to both national classification and IPC

**B. FIELDS SEARCHED**

Minimum documentation searched (classification system followed by classification symbols)
Int.Cl. C08J5/18, B32B27/32, B65D65/40, B29C55/04, B29K23/00

Documentation searched other than minimum documentation to the extent that such documents are included in the fields searched
Published examined utility model applications of Japan      1922–1996
Published unexamined utility model applications of Japan    1971–2021
Registered utility model specifications of Japan            1996–2021
Published registered utility model applications of Japan    1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/022060 A1 (TOYOBO CO., LTD.) 30 January 2020 (2020-01-30), claims, paragraphs [0037], [0038], examples | 1–6 |
| A | WO 2017/098953 A1 (DIC CORP.) 15 June 2017 (2017-06-15), claims, examples | 1–6 |
| A | WO 2019/123944 A1 (TOYOBO CO., LTD.) 27 June 2019 (2019-06-27), claims, examples | 1–6 |
| A | JP 2012-500307 A (TORAY PLASTICS (AMERICA), INC.) 05 January 2012 (2012-01-05), claims, examples | 1–6 |

☒ Further documents are listed in the continuation of Box C.　　☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 June 2021 | 15 June 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/012697 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2015-527943 A (TORAY PLASTICS (AMERICA), INC.) 24 September 2015 (2015-09-24), claims, examples | 1-6 |
| A | JP 2014-141302 A (DAI NIPPON PRINTING CO., LTD.) 07 August 2014 (2014-08-07), claims, examples | 1-6 |

Form PCT/ISA/210 (second sheet) (January 2015)

| INTERNATIONAL SEARCH REPORT | International application No. |
|---|---|
| Information on patent family members | PCT/JP2021/012697 |

```
WO 2020/022060 A1   30 January 2020      TW 202014304 A

WO 2017/098953 A1   15 June 2017         KR 10-2018-0092939 A

WO 2019/123944 A1   27 June 2019         TW 201930415 A

JP 2012-500307 A    05 January 2012      WO 2010/019943 A1
                                         claims, examples

JP 2015-527943 A    24 September 2015     WO 2013/180710 A1
                                         claims, examples
                                         EP 2855149 A1

JP 2014-141302 A    07 August 2014       (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5790497 B
- JP 2014141302 A
- JP 2012500307 T
- WO 2019123944 A1
- JP 2000186159 A